# EUROPEAN PATENT APPLICATION

(11) **EP 1 887 350 A2**
(43) Date of publication of application: **13.02.2008**
(21) Application number: 07380236.5
(22) Date of filing: 09.08.2007
(51) Int. Cl.: G01N 27/447

(54) **Method for loading samples for submerged agarose gel electrophoresis**

(30) Priority: 11.08.2006 ES 200602190
(71) Applicant: UNIVERSIDAD DEL PAIS VASCO-EUSKAL HERRIKO UNIBERSITATEA, 48940 Leioa (Vizcaya) (ES); Laboratorios aidelos SRL, 48150 Sondika Vizcaya (ES)
(72) Inventor: Martinez de Pancorbo, M. de los Angeles, 48993 Getxo (Vizcaya) (ES); Rosique Sola, Melania Julieta, 48620 Plentzia (Vizcaya) (ES); Ramos de Pablo, Rodrigo, 01009 Vitoria-Gazteiz (Alava) (ES); Eguskiza Madariaga, Gaizka, 48630 Gorliz (Vizcaya) (ES)
(74) Representative: Carpintero Lopez, Francisco

(57) **Abstract**

The present invention relates to a method for loading nucleic acid samples for submerged agarose gel electrophoresis wherein the loading of each individual sample is done by a) obtaining the liquid sample of the nucleic acids to be analysed; b) obtaining the individual solid support; c) adsorption of the liquid sample in the individual solid support; and d) depositing of the individual solid support containing the sample in a well in the agarose gel for conducting the electrophoresis of the nucleic acids in the gel, where the loading of the samples is performed before submerging the agarose gel in a migration buffer. Likewise, it contemplates the loading device for said method and the electrophoresis kit based on using this device.

## Description

### FIELD OF THE INVENTION

The field of application of the present invention is Molecular Biology, specifically the field of electrophoresis techniques. In particular, this invention relates to a method for loading nucleic acid samples for submerged agarose gel electrophoresis, as well as the device that employs this method and an electrophoresis kit based on this device.

### BACKGROUND OF THE INVENTION

Electrophoresis is an analysis technique based on separating macromolecules. Separation occurs due to the different mobility of charged macromolecules when these are under the influence of an electrical field due to their charge/mass ratio.

Nucleic acids are macromolecules that are negatively charged due to the presence of phosphate groups in their structure. The nature of the phosphodiester bond of polynucleotide chains conditions the charge of a nucleic acid, which is approximately equivalent to the number of phosphate groups.

Electrophoresis is conducted in purpose designed tanks, usually horizontal, with an electrode at each end, and requires two indispensable elements: the mobile phase and the stationary phase. The mobile phase is the buffered medium that allows the charged molecules to move towards the corresponding electrodes when an electrical field is generated. The stationary or support phase, is a polymer of a gelatinous nature with a homogenous-size pore that is submerged and soaked in the mobile phase.

The polymer used for electrophoretic analysis of large-sized nucleic acids (100pb-10kb) is agarose. This technique involves making small hollows or wells in one end of an agarose gel in which the samples are placed for analysis. The gel is subjected to an electrical current in such a way that the negatively charged nucleic acids, move through the gel towards the positive pole (anode). When the electrophoresis is over, the relative location of the fragments is determined by different detection methods. Staining with ethidium bromide, a fluorescent probe following exposure to UV light, is a common method of detecting DNA fragments, since the probe fits in between the DNA's double helix and emits light. The effective separation of the DNA or RNA fragments (resolution) depends on both the mass and the charge of the different fragments (charge/mass ratio).

In commonly used techniques, depositing the samples of nucleic acid in the wells in the agarose gel is done in the liquid phase following the standard methodology described below:
- the sample to migrate is mixed with a buffer or loading buffer to increase its density,
- the gel is placed inside the electrophoresis tank and is covered with the migration buffer, leaving it submerged,
- a small volume of the sample solution is taken, ranging between 5 and 30 microlitres, as relevant, with an automatic precision micropipette, and is deposited in the well previously made for this purpose in the gel.

Precision micropipettes are expensive and additionally, need to be handled with extreme care to avoid decallibration. Therefore, depositing the sample in liquid phase must be conducted in a very careful and accurate manner to avoid sudden movements that cause the sample to be analysed to flow out of the well and therefore be lost. At the same time, it is important to avoid perforating the base of the well with the tip of the micropipette.

The precise balance needed to introduce the tip of the micropipette into the well at a height that avoids perforating the base of it and to accurately introduce the liquid containing the sample makes this technique difficult for persons practicing it for the first time, or who do not conduct it on a regular basis.

However, depositing the sample is a key stage in the process of electrophoretic migration and if incorrectly executed, will prevent obtaining the electrophoresis results.

On the basis of this fact, there are documents in the state of the art that share the objective of facilitating the depositing of samples in electrophoresis gels.

Therefore, document US 6376231 discloses a loader for depositing a plurality of samples, consisting of a cation-exchange paper for chromatography, for vertical electrophoresis in polyacrylamide gel, designed for all of the gel.

On a similar note, documents US5681437 and US5683915 disclose a mechanism for simultaneously depositing a plurality of samples on a medium in solid planar phase, such as the one used in chromatographic techniques, electrophoretic techniques or fine-layer chromatography, or on planar growth media, such as agarose or fabric.

Document US 99/12025 discloses a loader of samples in solid phase for all of the gel, similar to the one disclosed in US 6376231. As in this document, the purpose of this mechanism is its use in vertical polyacrylamide electrophoresis gels. Therefore, it describes a solid support of polyethersulphone or nylon, capable of immobilising test samples in a reversible manner, to facilitate their loading in electrophoresis gels.

However, none of the abovementioned documents defines a loading device in solid support for submerged agarose gels electrophoresis. Additionally, the methods disclosed use all of the gel. At the same time, the design of these systems does not eliminate the need to use micropipettes when it comes to depositing the samples in the load supports.

Documents W09627787 and W09800706 relate to a loading device for submerged agarose gels electrophoresis, based on a loader of samples for all of the gel, in other words, for simultaneous loading of a plurality of samples, whose design consists of a porous solid medium wherein the samples are deposited for subsequent transfer to the gel. The shape of this support medium is that of a comb, usually used to form the wells during the gel polymerization. The material of the loader is a nylon or nitrocellulose membrane. This device has been designed to load the samples in the gel once submerged in the migration buffer.

This type of loader has two drawbacks. On the one hand, inserting the loader (comb) must be done with reasonable accuracy, since each one of the sample zones (comb teeth) must fit well into each one of the wells in the gels, because if any were left outside, diffusion would not take place properly. The complexity, therefore, is defined by the fact of having to introduce all of the comb teeth into the corresponding wells simultaneously, bearing in mind that the migration solution is covering the gel.

On the other hand, the comb is a loader for several samples, which makes it difficult to deposit individual samples. This is an important methodological barrier when the people depositing each sample are different, such as for example during teaching practice, when each pupil is to deposit a sample and must do so into the same loader as the rest of the pupils.

In addition, the design of this loader also fails to prevent having to use precision micropipettes for depositing the samples.

Consequently, although the loading devices described above share the common objective of facilitating the deposit of samples in electrophoresis gels, there are no bibliographical references in the state of the art that make it possible to eliminate the need for precision micropipettes.

Therefore, the described mechanisms have been developed solely for their use in research. Electrophoretic migration for teaching purposes is difficult, and therefore there is a need to resolve the problem of depositing samples in agarose gel.

In the case of starch gel for electrophoretic separation of proteins obtained from crude cellular extracts (Allozyme Electrophoresis Techniques used by the Gene Conservation Laboratory;<http://www.cf.adfg.state.ak.us/geninfo/research/genetics/techfac /electro2.php>), the samples are loaded in the solid phase. However, this electrophoresis is different from electrophoresis in agarose gels in terms of:
- The purpose of the separation. Electrophoresis in starch gel is used to separate proteins, mainly to differentiate between their isoforms. However, submerged agarose gels electrophoresis is used to separate fragments of nucleic acid;
- The nature of the support medium for this type of electrophoresis, which is hydrolysed starch instead of agarose;
- The placing of the gel is done in a similar manner to cellulose acetate or polyacrylamide electrophoresis, where the gel makes contact with the electrophoresis buffer exclusively at its ends. Unlike the former, the agarose gel of submerged electrophoresis is immersed in the electrophoresis buffer; and
- The loading of the samples in starch gels is done in a solid phase, by inserting in the gel a strand soaked in the sample. These strands are eliminated from the gel after 15 minutes of the beginning of electrophoretic migration. However, loading samples in agarose gels is done by depositing the solution of nucleic acids for analysis mixed with a loading buffer in the well made for this purpose in the gel.
   Electrophoresis of nucleic acids in starch gels has never used the sample support in solid medium because nucleic acids are purified and dissolved in a buffer, unlike proteins that will be separated through electrophoresis in starch gel. The latter are in crude extract and therefore, mixed with cellular debris and occasionally adhered to membranes. For this reason, non-purified deposit proteins is done in solid phase, whereas purified samples load, of both proteins and nucleic acids, is done in the liquid phase.
   Therefore, the authors of the present invention, in view of the needs of the state of the art, have developed a new method for loading samples of nucleic acids for submerged agarose gels electrophoresis that is much more simple and economical than those used habitually, which consist of avoiding the liquid phase and replacing it by making the deposit in solid phase, avoiding the use of precision micropipettes, which facilitates the depositing of samples.
   Also, this method allows individualised samples to be loaded, unlike the methods described in the state of the art that share simultaneously depositing multiple samples, using all of the gel.
   Consequently, having overcome the methodological barrier that the loading of samples represented up until now, the present invention makes it possible to apply submerged agarose gels electrophoresis to various circumstances, including teaching practice, thus allowing the development of Molecular Biology practice kits.
   Therefore, the present invention simplification of the loading method makes it possible to be used by non-trained personnel, obtaining results equivalent to those obtained in research laboratories following traditional methods.

### BRIEF DESCRIPTION OF THE DRAWINGS

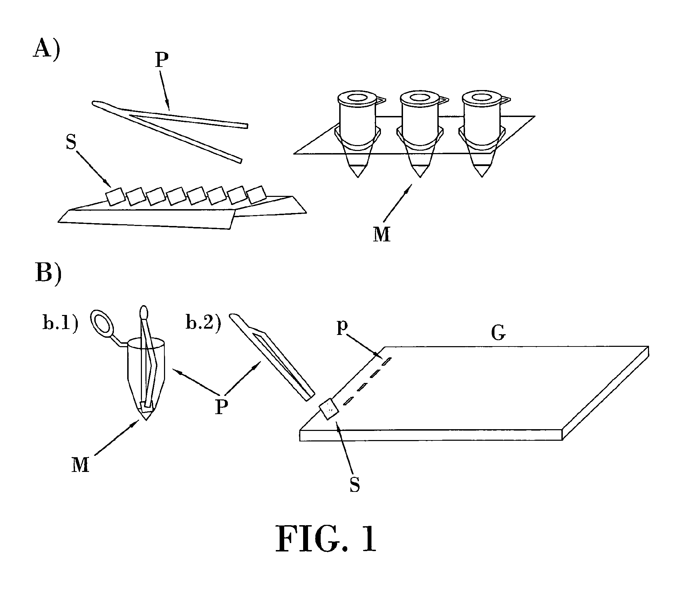

**Figure 1. A)** Device for loading nucleic acid samples for submerged agarose gels electrophoresis: (P) pincers; (M) liquid sample; (S) individual solid supports; B) Method for loading nucleic acid samples for electrophoresis in agarose gel: **b.1)** Insertion with pincers (P) of the individual solid support (S) in the liquid sample (M) for adsorption; **b.2)** Deposit with pincers (P) of the individual support (S) containing the sample (M) in a well (p) in the agarose gel (G).

### OBJECT OF THE INVENTION

In the first instance, the present invention relates to a method for loading individual samples of nucleic acids in solid support for submerged agarose gels electrophoresis. At the same time, another object of the invention relates to a device for depositing individual samples of nucleic acids based on the foregoing method.

Finally, the object of the present invention is an electrophoresis kit for samples of nucleic acids submerged in agarose gels that comprises the abovementioned loading device.

### DESCRIPTION OF THE INVENTION

Submerged agarose gel electrophoresis is one of the most commonly used methods in Molecular Biology. Until now, depositing the sample was one of the main problems, since it required the use of precision micropipettes, which are expensive, and a certain degree of skill and/or training. For this reason, because the market had no teaching practices for analysing nucleic acids to resolve this problem, the possibility of doing basic Molecular Biology training practice in secondary teaching laboratories is virtually non-existent.

To cover these needs, the authors of the present invention have developed an alternative method of loading in such a way that, in one of the main aspects of the present invention, it contemplates a method for loading nucleic acid samples (DNA and RNA) for submerged agarose gels electrophoresis, in which the loading of each individual sample comprises the following stages:
a. obtaining the liquid sample of the nucleic acids for analysis;
b. obtaining an individual solid support;
c. adsorption of the liquid sample obtained in a) in the individual solid support obtained in b);
d. deposit of the individual solid support containing the sample in a well in the agarose gel for electrophoresis of the nucleic acids to take place in the gel.

The loading of the samples in the agarose gel is done before submerging the agarose gel in the migration buffer. This makes loading the sample easier and avoids errors that could invalidate the sample. Once the sample has been placed correctly without it being able to spread, the migration solution is poured.

The samples can be deposited in the gel before introducing the gel-sample in the electrophoresis tank. The possibility is also contemplated of the gel being inside the tank (without the migration buffer) and the sample being placed on the gel at that point.

In a preferred embodiment of the invention, the individual solid support used is cellulose, of the type consisting of highly absorbent thick paper with a resistant weft, with a similar area to that of the well in the agarose gel for electrophoresis in which the sample will be deposited.

The sample adsorption in the individual solid support is performed by inserting the support in a container (vial, eppendorf tube, etc.,) with a sufficient volume of liquid sample to soak the solid support.

Finally, the sample is deposited in a simple fashion by inserting the individual solid support containing the sample inside the well of the gel, with the help of accessories which do not require any form of user training, for example a pincer.

Another principal feature of the invention refers to the device for loading the nucleic acid samples for submerged agarose gels electrophoresis by means of the described method (figure 1 (A)).

Thus, the device would consist of a set of tubes containing the liquid sample for analysis (M), a set of individual solid supports (S), preferably made of cellulose, of an equivalent size to the well (p) in the gel (G) and pincers (P) for introducing the support into the sample and subsequently to place it in the well.

Finally, another aspect of the invention refers to an submerged agarose gels electrophoresis kit of nucleic acid samples that comprises the described loading device.

The present invention has made it possible to improve conventional methodology in several aspects.
- Firstly, as already mentioned, it is not necessary to place the gel inside the electrophoresis tank before depositing the samples.
- Secondly, the use of automatic precision micropipettes for depositing the sample is avoided, since the solid support can be easily deposited with the help of some pincers.
- Finally, there is no risk of losing the sample while depositing it in the gel, since because it is in solid medium, it does not come out of the well due to handling errors.

The result of these improvements makes it possible to use this loading method in any non-specialised laboratory. In other words, once the methodological barrier has been eliminated that up until now was dictated by loading the electrophoretic samples in submerged agarose gels, the present invention offers application in several circumstances, among which we would highlight those designed for teaching.

Thus, in the event of spoiling the loader through poor use, it is only necessary to throw away an individual support and not a multiple loader, with the financial advantages this entails. It is also important that in the case of teaching, each pupil may conduct the full electrophoresis process, since not only is the sample deposited in the support, but also it is loaded onto the gel. The example below illustrates the present invention but should not be considered limiting of the essential aspects of its object, as set out in the preceding paragraphs of this description.

### Example 1

Based on a device for loading samples in agarose gels, consisting of:
1. 4-8 x 1.5 ml tubes with 7 microlitres of sample for analysis by electrophoresis.
2. 1 x 1 % agarose gel with 4x2 mm wells in a hermetic container or envelope.
3. 4-8 solid supports, highly absorbent resistant weft papers of 4x2 mm.
4. A pincer

### Biological maternity diagnosis kit

The purpose of developing this kit was to offer pupils practice to help them understand how kinship diagnosis is conducted. Therefore, the chosen example consisted of determining the matrilineal kinship relation between a son and two potential biological mothers.

A kit was supplied for depositing and migrating electrophoretic samples consisting of a PCR-amplified product of a fraction of the hypervariable segment II of the mitochondrial DNA control region of alleged mother 1, mother 2, son, negative amplification control and size marker; a dye for staining the gel upon conclusion of the electrophoresis; the Anderson reference sequence corresponding to the amplified fragment and the electropherograms of the base sequence of the fragment of alleged mother 1, mother 2 and son. The practice protocol was included.

The methodology to be followed consisted of emulating the procedure of a Molecular Biology laboratory that conducts this type of diagnostic tests. In the first place, the physical presence of the supplied PCR products was observed in 1.5 ml tubes. Next, electrophoresis was conducted in agarose gel to check the validity of the PCR reaction and finally the results of the PCR product sequencing were analysed by comparison with the Anderson reference sequence of the mitochondrial DNA.

### Discussion

The only part of a kinship diagnosis test that can be transferred to a non-specialised teaching laboratory, as in the case of secondary schools, is electrophoresis. Secondary teaching centres, except in the case of those designed for vocational training, do not have thermocyclers for PCR and certainly not DNA sequencers. However, in some cases they do have electrophoresis sources and tanks. Even if they do not, this type of equipment can be borrowed temporarily or hired since it is solid and small, which means it is not complicated to transport. For all these reasons, a practice was designed to show the electrophoresis phase, which reflects very well part of the real procedure that takes place in Molecular Biology laboratories specialised in diagnosing kinship. In this way, a secondary school pupil became familiar with DNA analysis procedures, saw part of them and this contributed to their better understanding of the concepts discussed in the theoretical program. The weak point in adapting these practices to secondary teaching laboratories is to a great extent, the difficulty in loading samples in agarose gel and performing electrophoresis with guarantees of success because if the procedure of depositing the samples is faulty, the results will be poor or non-existent. However, depositing the samples in solid support of the present invention, instead of in the conventional liquid medium, guaranteed that the samples would not be lost and consequently, electrophoresis was conducted successfully. Eliminating this barrier made it possible to design this kit that in all events guaranteed correct depositing of the sample.

### Example 2

### Kit for detecting transgenic soy and corn seeds

Based on a kit similar to the one described in example 1.

The purpose of developing this kit was to offer pupils a practice to help them understand how the presence of genetic material is analysed that indicates whether a plant is transgenic. Thus, the chosen example consisted of analysing various DNAs extracted from plant seeds to determine whether or not they were transgenic and to distinguish whether it was DNA from soy or corn seeds.

A kit was supplied for depositing and migrating electrophoretic samples consisting in PCR-amplified products of a fraction of 35S promoter and NOS terminator of DNA extracted from authorised transgenic soy and corn seeds, negative amplification control and size marker and a dye for straining the gel upon conclusion of the electrophoresis. The methodology was similar to that of example 1.

The event that gave rise to the authorised transgenic soy analysed in the practice included the 35S promoter of the cauliflower mosaic virus but not the NOS terminator. In the case of the corn, the event included the 35S promoter but not the NOS terminator. Once electrophoretic migration was completed and the image of the electrophoretic fragments was obtained, the pupils were able to determine which samples corresponded to transgenic plants and which did not. At the same time, they were able to establish which of the analysed samples was transgenic soy and which was transgenic corn.

### Discussion

As discussed in example 1, the only part of detecting genetically modified organisms that is transferable to a non-specialised teaching laboratory is electrophoresis. Secondary teaching centres, except in the case of those offering vocational training, do not have PCR thermocyclers or quantitative PCR systems such as those used specialised laboratories for detecting and quantifying genetically modified organisms. However, as mentioned in the previous example, secondary schools do have electrophoresis sources and tanks. For these reasons, a practice was designed to show the electrophoresis phase to illustrate the principles of transgenic screening.

As in the previous example, depositing the samples in solid support made it possible for the electrophoresis to take place successfully.

## Claims

1. Method for loading nucleic acid samples for submerged agarose gels electrophoresis, **characterised in that** the loading of each individual sample comprises the following stages:
a. Obtaining the liquid sample of the nucleic acids for analysis;
b. Obtaining an individual solid support;
c. Adsorption of the liquid sample obtained in a) in the individual solid support obtained in b); and
d. Deposit of the individual solid support containing the sample in a well in the agarose gel for electrophoresis of the nucleic acids to take place in the gel,
where the loading of the samples is performed before submerging the agarose gel in a migration buffer.

2. Method, according to claim 1, **characterised in that** the individual solid support has a similar area to that of the well in the agarose gel in which it is deposited in stage d).

3. Method, according to claim 2, **characterised in that** the individual solid support is made of cellulose.

4. Method according to claim 1, **characterised in that** stage c) is performed by introducing the individual solid support in a container with a sufficient volume of liquid sample to soak the support in question.

5. Device for loading nucleic acid samples for submerged agarose gels electrophoresis according to the method of claims 1-4.

6. Submerged agarose gels electrophoresis kit of nucleic acid samples **characterised in that** it comprises a loading device according to claim 5.
